Europäisches Patentamt

European Patent Office

Office européen des brevets

(11) Publication number: **0 199 580**
**B1**

# EUROPEAN PATENT SPECIFICATION

(45) Date of publication of patent specification: **23.01.91**

(21) Application number: **86303018.5**

(22) Date of filing: **22.04.86**

(51) Int. Cl.$^5$: **C 11 B 7/00,** C 11 C 3/08, C 11 C 3/10, A 23 G 1/00

(54) **Process for the preparation of symmetrical triglycerides.**

(30) Priority: **24.04.85 GB 8510446**

(43) Date of publication of application:
**29.10.86 Bulletin 86/44**

(45) Publication of the grant of the patent:
**23.01.91 Bulletin 91/04**

(84) Designated Contracting States:
**AT BE CH DE FR GB IT LI NL SE**

(56) References cited:
**EP-A-0 093 602**
**DE-A-2 747 765**
**FR-A-2 340 979**

(73) Proprietor: **UNILEVER PLC**
**Unilever House Blackfriars P.O. Box 68**
**London EC4P 4BQ (GB)**
(84) **GB**

(73) Proprietor: **UNILEVER NV**
**Burgemeester s'Jacobplein 1 P.O. Box 760**
**NL-3000 DK Rotterdam (NL)**
(84) **BE CH DE FR IT LI NL SE AT**

(72) Inventor: **Moore, Harry**
**25 Pavenham Road**
**Oakley Bedfordshire (GB)**
Inventor: **Brench, Alan William**
**28 Birchall Road**
**Rushden Northants (GB)**
Inventor: **Macrae, Alasdair Robin**
**28 Leyside**
**Bromham Bedford MK43 8NE (GB)**

(74) Representative: **Dries, Antonius Johannes Maria et al**
**Unilever N.V. Patent Division P.O. Box 137**
**NL-3130 AC Vlaardingen (NL)**

## Description

This invention relates to improved fats and their preparation by transesterification under the influence of a lipase enzyme catalyst. The invention also relates to improved fats made by such processes and confectionery compositions particularly chocolate containing such fats.

Cocoa butter is rich in symmetrical disaturated triglycerides of palmitic and stearic acid and substitute fats made to replace it are similarly composed, including for example the mid-fraction recovered from palm oil by fractionation from a polar solvent as described in our British Patent Specification No. 827172.

In our British Patent Specification No. 1577933 a method is described for improving fats for confectionery purposes, by enhancing the amount of symmetrical and especially disaturated, $C_{16}/C_{18}$ triglycerides in the fat. These triglycerides are largely responsible for the highly prized characteristics of cocoa butter and other vegetable butters used in chocolate and other confectionery. In the process described the fat undergoes transesterification under the influence of a lipase enzyme catalyst which is preferably 1,3-selective in its effect, when only the alpha or 1- and 3- fatty acid residues in the glycerides of the fat participate in the reaction. Free saturated fatty acid present for example stearic acid, participates in the reaction to replace unsaturated fatty acid residues in the glycerides in the feedstock in the position in which the catalyst is active, and free unsaturated fatty acids are liberated from these positions. Such enzyme-catalysed rearrangements are equilibrium reactions and a proportion of saturated fatty material, both free fatty acids and glycerides, is inevitably found in the rearrangement composition. The rearranged product may be recovered by fractionation from polar solvents. The rearrangement is carried out in the presence of only a small amount of water, usually less than 2% by weight of reactants, to activate the catalyst and may therefore be regarded as substantially non-aqueous. Any solvents used should be immiscible with water.

In example 14 a mixture of free fatty acid and a glyceride top fraction of unspecified composition is fractionally recrystallised after an hour at 5°C in a hexane solution in which a mixture of palm mid-fraction and stearic acid has been selectively rearranged under the influence of 1, 3-selective enzyme catalyst. The residue after removing the solvent was redissolved in acetone and a triglyceride mid-fraction containing unspecified diglycerides is recrystallised at 4°C from the resulting solution.

The present invention provides a process for the spearation of symmetrical disaturated triglycerides from a fatty composition by fractional crystallisation from solutions of the fatty composition, first in non-polar and then in polar solvents which is characterised in that the fatty composition is first fractionated from hexane at a temperature of at most 5°C to remove a stearine fraction consisting of saturated free fatty acid and saturated partial glycerides and recover an olein fraction substantially free from saturated components including saturated free fatty acid and the olein fraction is then refractionated at a temperature of at least 5°C from acetone to separate a further stearin fraction comprising symmetrical disaturated triglycerides from an olein fraction comprising unsaturated fatty acid and partial glycerides thereof.

The present invention further provides a process for the preparation of symmetrical disaturated triglycerides comprising rearranging a fatty composition including glycerides and saturated and unsaturated fatty acid moieties in a substantially non-aqueous, water-immiscible organic liquid phase under the influence of an active lipase enzyme as rearrangement catalyst, wherein saturated and unsaturated fractions are separated by successive fractional crystallisation stages as claimed in claim 1 and at least part of the saturated fraction is re-cycled to the rearrangement stage of the process.

By means of the invention both saturated and unsaturated by-products and unreacted components may be removed from suitable fats eg. palmitic fat such as palm oil or its fractions containing saturated fatty acid, or the desired products of enzyme rearrangement processes. The desired products are usually unsaturated themselves. For example, enzyme processes carried out to recover products with high amounts of symmetrical disaturated triglycerides, closely resembling the composition of cocoa butter for use as cocoa butter substitute fats, are usually applied to fatty compositions of feedstock containing saturated free fatty acid — usually stearic acid — or saturated glycerides and a highly unsaturated triglyceride composition eg. a low-melting palm oil fraction. In accordance with the invention the balance of saturated fatty components comprising free fatty acid and partial and triglycerides, may be separated from the product and at least part thereof recycled to the feedstock, thererby improving the economy of the process. Moreover, unsaturated partial glycerides may also be separated by fraction crystallisation from the desired product, in accordance with the invention, where substantial amounts of symmetrical disaturated triglycerides are present, particularly hard butters from vegetable origin, for example palm oil.

The invention is particularly suitable for enzyme rearrangment processes for the preparation of fat closely resembling cocoa butter, with a high proportion of symmetrical disaturated trigylcerides of $C_{16}$ and $C_{18}$ glycerides, which are suitable for use as cocoa butter or replacement fats. Suitable feedstock for such reactions comprises a mixture of palm oil or its fractions, with stearic acid. It is surprising that stearic acid may be recovered from the product of such reactions, in a high state of purity substantially free from glycerides and in particular, substantially free from palmitic acid and suitable for recirculation to the feedstock. Sunflower and safflower oils especially with high oleate content may be used as feedstock with saturated fatty acid, ester or glycerides thereof.

Preferably the separation of saturated components of the fatty composition is carried out according to the invention in two or more fractionation stages with the separation of stearin fractions in each stage. The first stearin fraction consists of free unsaturated fatty acid substantially free from glycerides. In reactions in which palm fat and stearic acid (or esters thereof) are rearranged, the first stearin fraction can be obtained substantially free from palmitic acid by-product. The second stearin fraction comprises much of any remaining free saturated free fatty acid including any palmitic acid present, together with saturated glycerides, both triglycerides and partial glycerides. In reactions in which saturated glycerides are used as part of the feedstock, these may be recycled. The olein remaining from the second stage consists largely of unsaturated acids and unsaturated partial and triglcerides, from which disaturated triglycerides may be recovered as a third stearin fraction, substantially free from other glycerides remaining, including more highly unsaturated triglycerides and unsaturated partial glycerides in addition to unsaturated fatty acids.

The stearin fraction recovered from rearrangement processes using 1, 3-regiospecific enzyme catalysts from vegetable oils and fats, particularly in reactions with saturated fatty acid and/or saturated glycerides, is rich in symmetrical disaturated triglycerides and substantially free from partial glycerides as well as saturated triglycerides and unsaturated glycerides.

An important feature of the invention is that symmetrical disaturated triglycerides can be obtained by selective rearrangement, substantially free not only from saturated fatty acids and saturated triglycerides, but also from partial glycerides, saturated partial glycerides being removed as a stearin fraction and unsaturated partial glycerides remaining in the final fractionation stage, as the olein fraction from which the desired triglyceride product is separated. By this means partial glycerides are removed without recourse to selective adsorption methods. This feature is particularly important in the preparation of cocoa-butter-like fats, since the presence of even small amounts of partial glycerides adversely affect the melting characteristics of these products.

Preferably the fractionation stage or stages for the separation of saturated components, is carried out in hexane as solvent, and the separation of unsaturated components from the desired product is carried out in acetone as solvent. Preferably the rearrangement part of the process of the present invention is itself carried out in solution in hexane as solvent, the subsequent fractional crystallization stage of the invention for the removal of saturated components being carried out directly from the solution of the reaction mass in hexane.

The arangement process may also however be carried out on the product of a solvent-free arangement process, by dissolving the product mass in a suitable non-polar solvent.

Hexane or other hydrocarbons are preferred as the non-polar solvent, particularly aliphatic hydrocarbons containing 5 to 10 carbon atoms, preferably remaining liquid at atmospheric pressure between 0° and 120°C. Preferably as polar solvent acetone is used to which a small amount of water (1—10% by weight) is added to improve solvent action to retain diglycerides in the olein. Other ketones of food quality may be used, or the polar solvent may comprise nitroparaffins, alcohols or liquid carbon dioxide.

It should be understood that stearic acid, or longer chain saturated fatty acids eg. arachidic or behenic acid or their alkyl of other esters may be used in a rearrangement stage in accordance with the process of the present invention.

A wide variety of fats and glyceride oils from natural sources may be used as feedstock in the invention, where substantial amounts of symmetrical disaturated triglycerides are present, particularly hard butters from vegetable origin, for example palm oil. The invention is particularly applicable to the preparation of hard butters for confectionery from vegetable oils and butters. These are rich in 2-unsaturated triglycerides from which by selective 1, 3 reaction with palmitic and stearic acid there may be obtained products rich in symmetrical disaturated $C_{16}$ and $C_{18}$ fatty acid triglycerides. These confer excellent melting characteristics on the product, similar to those of cocoa butter itself. Suitable vegetable oils include olive, sunflower and safflower and palm oils. The process of the invention is particularly suitable for the preparation of SOS/POS mixture from such sources, by reaction with stearic acid. Similar products may also be recovered directly from suitable vegetable butters eg. palm oil, by fractionation alone in accordance with the invention.

Suitable lipase enzymes for use in a rearrangement stage of the invention include *M miehei, A. niger, R. japonicus, R. arrhizus* and *R. niveus*. The catalyst is preferably used as described in out patent specification GB—A—1577933 in active form obtained by wetting the commercially available dried form of catalyst, sufficient water being maintained in the liquid reactant phase to maintain water activity at a level at which the catalyst is active but effects minimum hydrolysis reaction. The enzyme is preferably fixed on a suitable support material e.g. inert inorganic particulate matter for example Celite, kieselguhr or macroreticular ion exchange resin. The reaction may be carried out batchwise or in a continuous mode, when the catalyst is preferably kept in a bed through which the reactants in liquid phase, whether or not in solution in added solvent, are passed.

## Example 1

Equal parts by weight of stearic acid and an olein fraction of dry fractionated palm oil was rearranged at 45°C in hexane solution, by percolation down a column packed with active rearrangement catalyst comprising Mucor Miehei lipase supported on Celite and previously activated with water. The reactant contact times was approximately 20 minutes. The IV-value of the palm fraction composition was 55, whereas the glyceride composition was as follows by wt%.

| S3 | SOS | SSO | SLnS | SOO | SOLn | O3 |
|----|-----|-----|------|-----|------|-----|
| 0.3 | 36 | 3.5 | 9 | 30.0 | 3.5 | 11.5 |

After removing solvent the rearrangement product composition was as follows:

Free fatty acid.............................................................................................................................53%
Diglycerides .............................................................................................................................. 7%
Triglycerides ..............................................................................................................................40%

The free fatty acid analysis was as follows:

| 14:0 | 16:0 | 18.0 | 18:1 | 18:2 | 20.0/22:0 |
|------|------|------|------|------|-----------|
| 0.4 | 18.4 | 62.8 | 13.2 | 2.1 | 3.1 wt% |

Diglycerides were principally disaturated approximately 5%, with 2% unsaturated diglycerides. Triglycerides were as follows:

| SSS | SOS | SSO | SLinS | Remainder |
|-----|-----|-----|-------|-----------|
| 6.5 | 52 | 3.0 | 14.0 | 24.5 |

The arrangement product mass was redissolved in 6 times its weight of hexane and fractionated by cooling at a rate of 1°C per minute from 50°C, using a fractionation vessel fitted with a cylindrical rotor closely fitting the crystallisation vessel and rotating at 125 rpm.

Fractionation was carried out in a succession of tests at 6—20°C. In each case the crystals were washed at the same temperature with fresh solvent. Yields of the stearine and olein and wash composition were determined and analysed. Good fractionation was effected, the yield of stearine increasing progressively from 14 to 31% with decreasing temperatures. Its free fatty acid content fell somewhat, from aproximately 97 to 89%, indicated by a marginal increase in saturated diglycerides from 2.3 to 4.3 and of triglycerides from 0.9 to 1.5%. Analysis of the free fatty acid content of the stearine fraction showed a marginal fall in stearic acid content from 89% to 85%, balanced by an increase in palmitic acid from 9 to 11.5%. No oleic acid was detected at all.

The stearine fraction was recycled to the rearrangement stage of the process.

The corresponding changes in olein yield were from 73% to 20°C to 40% at 6°C, with a corresponding fall of free fatty acid from 42 to 32%.

Greater amounts of glycerides appeared in the olein fraction than in the stearine fraction, triglycerides predominating at 50 to 59% as the temperature decreased, diglycerides being relatively unchanged at 7½ to 8%.

A second stearine fraction recovered from the mother liquor remaining, showed substantially increased amounts of saturated diglycerides. Solvent was stripped from the remaining olein and the residual glycerides were dissolved in acetone and refractionated at 5°C. Good yields of symmetrical disaturated triglycerides were recovered, substantially free from free fatty acid, less than 5% partial glycerides and saturated components generally.

## Example 2

In this Example the rearrangement conditions were as described in Example 1, the rearrangement being carried out at 50°C in a column containing 1 Kg activated catalyst, on 1.5 Kg/hour of a solution of 6 parts hexane, 2 parts oil and 1 of acid.

Fractionation was carried out in a scraped-surface, stirred vessel, first in hexane in a 3:1 by weight ratio of the oil fractionated and then in acetone in a ratio 8:1 of the oil fractionated. Both fractionations were obtained by cooling at a rate of 1° per minute, from 40°C. Successive fractionation experiments were carried out to remove a stearine fraction from hexane and recover from the olein remaining, a mid-fraction by crystallisation from acetone containing 0.5% water. In one series, hexane fractionation at 5°C was followed by acetone fractionation at 10°C and 5°C. In a further experiment hexane fractionation at −2°C was followed by acetone fractionation at 7°C. In each case recovered crystals were washed, using after hexane fractionation, a single wash of hexane in an amount twice the weight of oil fractionated, and following acetone fractionation, two washes, each of acetone in an amount three times the weight of oil fractionated.

The composition of the rearranged product was as follows:

Triglyceride ...........................................................................................................................55%
Diglyceride ............................................................................................................................. 8%
Free Fatty Acid ......................................................................................................................37%

The composition of the triglyceride was as follows:

| SSS | SOS | SSO | SLnS | SOO | Other |
|-----|-----|-----|------|-----|-------|
| 6.5 | 42.2 | 2.5 | 11.9 | 20.4 | 15.9 |

The diglyceride composition consisted of approximately equal parts of disaturated, monosaturated and diunsaturated diglycerides.

The composition of the free fatty acid was as follows:

| 16:0 | 18:0 | 18:1 | 18:2 |
|------|------|------|------|
| 33 | 48 | 16 | 3 |

a) *Hexane Topping*

The yield of stearine increased from 27% to 5°C to 48% at minus 2°C, the free fatty acid content of the stearine falling correspondingly from 72% to 52%, with a marked increased in triglyceride content from 18 to 41%.

b) *Acetone Bottoming*

The triglyceride composition of the stearine fraction was better than 93% for all fractionation regimes used. Diglycerides similarly remained low at 1 to 2% and free fatty acid at 4.5 to 5%.

The SOS of the primary oleins (after hexane fractionation) decreased from 46% to 5°C to 31% at minus 2°C but with little change in $S_3$ SSO and SLnS. The SOS content of the mid-fraction product was as high as 80% of the 5°C fractionation, falling to 72% at minus 2°C, with some increase in SLnS and other triglycerides.

The accompanying Table showing the solids content of the fractions recovered at various temperatures, compared with the solids content of two typical cocoa butters, demonstrates the high quality of the product obtained according to the process. Chocolate compositions made up using the fat as a conventional cocoa butter showed excellent characteristics.

## Table

| Fract. Temp. °C | | Solids Content by Pulse NMR | | | | | |
|---------|-------------|----|----|----|------|-----|-----|
| | | | | Temperature °C | | | |
| Hexane | (Acetone) | 20 | 25 | 30 | 32.5 | 35 | 40 |
| 5 | 10 | 71 | 66 | 51 | 26 | 4 | 0 |
| 5 | 5 | 61 | 54 | 36 | 12 | 0.5 | 0 |
| -2 | 7 | 52 | 46 | 21 | 2 | 0 | 0 |
| 5 | 5 | 68 | 59 | 39 | 15 | 1 | 0 |
| Cocoa ) | i) W. African | 73 | 68 | 42 | 14 | 1 | 0 |
| Butters) | ii) Brazilian | 67 | 61 | 35 | 9 | 0.5 | 0 |

5

# EP 0 199 580 B1

## Claims

1. Process for the separation of symmetrical disaturated triglycerides from a fatty composition by fractional crystallisation from solutions of the fatty composition, first in non-polar and then in polar solvents which is characterised in that the fatty composition is first fractionated from hexane at a temperature of at most 5°C to remove a stearine fraction consisting of saturated free fatty acid and saturated partial glycerides and recover an olein fraction substantially free from saturated components including saturated free fatty acid and the olein fraction is then refractionated at a temperature of at least 5°C from acetone to separate a further stearin fraction comprising symmetrical disaturated triglycerides from an olein fraction comprising unsaturated fatty acid and partial glycerides thereof.

2. Process for the preparation of symmetrical disaturated triglycerides comprising rearranging a fatty composition including glycerides and saturated and unsaturated fatty acid moieties in a substantially non-aqueous, water-immiscible organic liquid phase under the influence of an active lipase enzyme as rearrangement catalyst, characterised in that the rearranged composition is then separated into saturated and unsaturated fractions by successive fractional crystallisation stages as claimed in claim 1 and at least part of the saturated fraction is re-cycled to the rearrangement stage of the process.

## Patentansprüche

1. Verfahren zur Abtrennung von symmetrisch digesättigten Triglyceriden aus einer Fettzusammensetzung durch fraktionierte Kristallisation aus Lösungen der Fettzusammensetzung, zuerst in nicht-polaren und dann in polaren Lösungsmitteln, dadurch gekennzeichnet, daß die Fettzusammensetzung zuerst aus Hexan bei einer Temperatur von höchsten 5°C fraktioniert wird, um eine aus gesättigter freier Fettsäure und gesättigten partiellen Glyceriden bestehende Stearinfraktion zu entfernen und eine Oleinfraktion zu gewinnen, die im wesentlichen frei von gesättigten Komponenten einschließlich gesättigter freier Fettäure ist, und die Oleinfraktion dann bei einer Temperatur von mindestens 5°C aus Aceton erneut fraktioniert wird, um eine weitere Stearinfraktion abzutrennen, die symmetrisch digesättigte Triglyceride aus einer ungesättigte Fettsäure und deren partielle Glyceride umfassenden Oleinfraktion enthält.

2. Verfahren zur Herstellung von symmetrisch digesättigten Triglyceriden, welches umfaßt: das Umlagern einer Glyceride und gesättigte und ungesättigte Fettsäurereste enthaltenden Fettzusammensetzung in einer im wesentlichen nicht-wässrigen, mit Wasser nicht mischbaren, organischen flüssigen Phase unter dem Einfluß eines aktiven Lipase-Enzyme als Umlagerungskatalysator, dadurch gekennzeichnet, daß die umgelagerte Zusammensetzung dann durch aufeinanderfolgende fraktionierte Kristallisationsstufen gemäß Anspruch 1 in gesättigte und ungesättigte Fraktionen getrennt wird und mindestens ein Teil der gesättigten Fraktion erneut zur Umlagerungsstufe des Verfahrens zurückgeführt wird.

## Revendications

1. Procédé de séparation de triglycérides disaturés symétriques à partir d'une composition grasse par cristallisation fractionnée à partir de solutions de la compositions grasse tout d'abord dans des solvants non-polaires puis dans des solvants polaires, qui se caractérise en ce que la composition grasse est tout d'abord. fractionnée à partir de l'hexane à une température d'au plus 5°C pour enlever une fraction stéarine constituée d'acide gras libre saturé et de glycérides partiels saturés et pour recueillir une fraction oléine essentiellement dépourvue de composants saturés incluant un acide gras libre saturé, et en ce que la fraction oléine est alors refractionnée à une température d'au moins 5°C à partir de l'acétone pour séparer une autre fraction stéarine comprenant des triglycérides disaturés symétriques à partir d'une fraction oléine comprenant un acide gras non saturé et ses glycérides partiels.

2. Procédé de préparation de triglycérides disaturés symétriques dans lequel on transpose une composition grasse incluant des glycérides et des fractions acide gras saturées et non-saturées dans une phase liquide organique essentiellement non-aqueuse, non-miscible à l'eau, sous l'influence d'une enzyme lipase active comme catalyseur de transposition, caractérisé en ce que la composition transposée est alors séparée en fractions saturées et non-saturées par des étapes de cristallisation fractionnée successives selon la revendication 1, et en ce qu'au moins une partie de la fraction saturée est recyclée vers l'étape transposition du procédé.

6